# FASCICULE DE BREVET EUROPEEN

(11) **EP 3 724 414 B1**
(45) Date de publication et mention de la délivrance du brevet: **17.04.2024**
(21) Numéro de dépôt: 18816067.5
(22) Date de dépôt: 14.12.2018
(51) Int. Cl.: E04B 1/41, F16B 5/02, E04B 1/24

(54) **DISPOSITIF ET PROCÉDÉ D'ANCRAGE D'UN ÉQUIPEMENT À UNE STRUCTURE DE GÉNIE CIVIL**
VORRICHTUNG UND VERFAHREN ZUR VERANKERUNG EINES GERÄTS AN EINER TIEFBAUSTRUKTUR
DEVICE AND METHOD FOR ANCHORING EQUIPMENT TO A CIVIL ENGINEERING STRUCTURE

(30) Priorité: 15.12.2017 FR 1762280
(43) Date de publication de la demande: 21.10.2020
(73) Titulaire: Framatome, 92400 Courbevoie (FR)
(72) Inventeur: NIEHAUS, Gaëtan, 69100 Villeurbanne (FR); MORLOT, Pascal, 69280 Marcy L'Etoile (FR); HUREL, Jean-Charles, 01800 Saint Maurice de Gourdans (FR)
(74) Mandataire: Lavoix
(86) Numéro de dépôt international: PCT/EP2018/084882
(87) Numéro de publication internationale: WO 2019/115742

(56) Documents cités:
- EP-A1- 2 855 947
- EP-A1- 2 855 947
- FR-A1- 2 744 501
- FR-A1- 2 744 501

## Description

L'invention concerne en général l'ancrage d'équipements sur des structures de génie civil, notamment dans les centrales nucléaires.

Dans les centrales nucléaires, les tuyauteries et autres composants des circuits hydrauliques peuvent être supportés en utilisant des platines d'ancrage fixées dans des structures de génie civil par des chevilles métalliques. Des poutres métalliques, par exemple des tubes ou des profilés, sont soudés sur les platines pour servir de support aux tuyauteries.

On connait du document FR 2 744 501 un dispositif d'ancrage d'un équipement à un support comprenant toutes les caractéristiques du préambule de la revendication 1.

Chaque centrale nucléaire est équipée de kilomètres de tuyauteries, et de milliers de supports, de manière à maintenir en place ces tuyauteries. Ces supports sont conçus pour résister à toutes sortes de sollicitations, notamment les dilatations thermiques des tuyauteries et les séismes.

Pour cela, il est nécessaire de fixer des platines d'ancrage dans des massifs de béton armé, à l'aide de chevilles métalliques.

Avant la mise en place de ces chevilles, la position exacte des fers constituant l'armature métallique du béton peut être repérée. En effet, il faut éviter de couper les fers par inadvertance au moment du perçage du béton, car la coupe d'un fer entraînerait une fragilisation du génie civil.

La position des chevilles par rapport à la platine peut ensuite être adaptée en fonction de la position des fers. Les positions finales des chevilles sur la platine ne sont donc pas connues avant l'intervention sur site.

La platine peut être percée sur le site, une fois les positions définitives connues. Ce perçage doit être réalisé avec une grande précision, car le diamètre des trous de perçage dans la platine est d'à peine deux millimètres de plus que le diamètre des tiges des chevilles. En cas d'erreur de perçage de la platine, il est nécessaire de renouveler l'opération sur une nouvelle platine.

Une telle approche conduit à un temps d'intervention sur site relativement long, d'autant plus problématique que l'intervention est sur le chemin critique des arrêts de tranches et oblige à mobiliser des équipes et des moyens matériels dont les coûts sont importants.

Par ailleurs, toutes les études de tenue mécanique de la platine et des ancrages sont effectuées en amont de l'intervention sur site, sur la base de positions nominales des chevilles par rapport à la platine, et non des positions définitives.

Dans ce contexte, l'invention vise à proposer un dispositif d'ancrage d'un équipement à une structure de génie civil, qui ne présente pas les inconvénients ci-dessus.

A cette fin, l'invention porte sur un dispositif d'ancrage selon la revendication 1.

Ainsi, il est possible, au moment de l'installation du dispositif d'ancrage, de fixer la cheville dans la structure de génie civil sur toute une plage de positions, correspondant à la surface de la zone déterminée de l'orifice correspondant. La position réelle de la cheville peut en conséquence être choisie en tenant compte de la position des fers renforçant éventuellement la structure de génie civil. La liaison de la cheville à la platine permet de recevoir la cheville à l'intérieur de l'orifice, quelle que soit la position de cette cheville dans la zone déterminée de l'orifice. Le verrouillage réversible permet ensuite de bloquer la cheville dans cette position donnée par rapport à la platine, par l'intermédiaire de l'organe de fixation.

Typiquement, ladite zone déterminée correspond à tout l'orifice, en particulier quand l'orifice est circulaire.

Préalablement, c'est-à-dire avant l'intervention sur site, il aura été vérifié par calcul que le dispositif d'ancrage de l'équipement à la structure de génie civil répond à toutes les exigences de tenue mécanique, quel que soit le cas de chargement envisagé.

Il est ainsi possible d'utiliser des platines dont les orifices sont pré-percés, ces platines n'ayant donc plus besoin d'être percées sur site.

Il n'y a plus de risque d'erreur de perçage sur la platine, c'est-à-dire de risque que les perçages effectués sur la platine ne correspondent pas aux positions réelles des chevilles fixées dans la structure de génie civil.

Par ailleurs, le dispositif d'ancrage de l'invention permet de positionner la platine à l'endroit prévu par les équipes de conception par rapport à la structure de génie civil. Ceci est possible du fait de la liaison de chaque cheville à la platine, permettant de placer la cheville à toute position donnée dans l'orifice correspondant.

Le dispositif d'ancrage peut également présenter une ou plusieurs des caractéristiques des revendications 2 à 6. Selon un second aspect, l'invention porte sur un procédé d'ancrage d'un équipement à une structure de génie civil selon la revendication 7.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique du dispositif d'ancrage monté sur la structure de génie civil, en vue de face ;
- la figure 2 est une vue en coupe longitudinale du dispositif de la figure 1, pour une bague de forme générale cylindrique ;
- la figure 3 est une vue de face de la platine du dispositif des figures 1 et 2 ;
- la figure 4 est une vue de face de la bague et de l'organe de fixation du dispositif des figures 1 et 2 ;
- la figure 5 est une vue similaire à celle de la figure 2, pour une bague de forme tronconique ; et
- la figure 6 est une vue illustrant la position des chevilles après fixation dans le génie civil par rapport aux orifices de la platine.

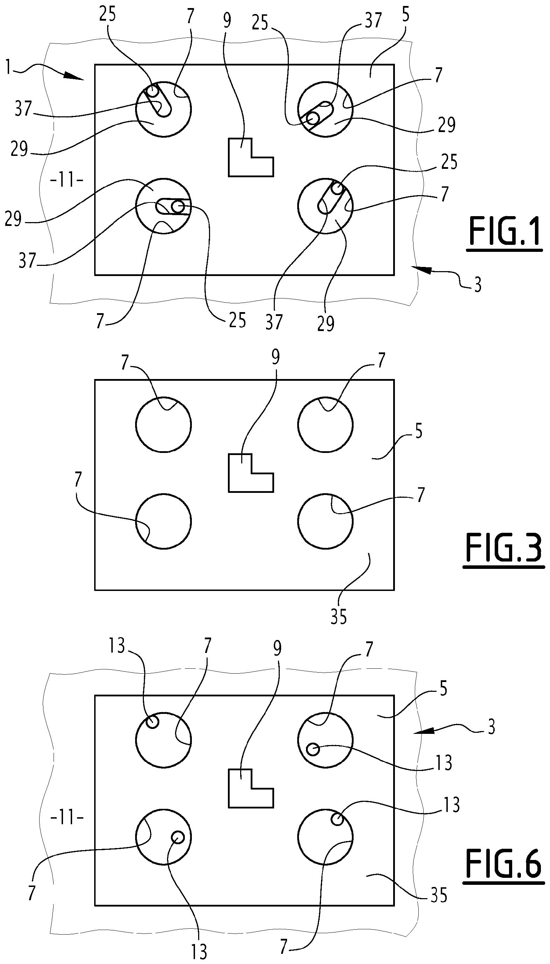

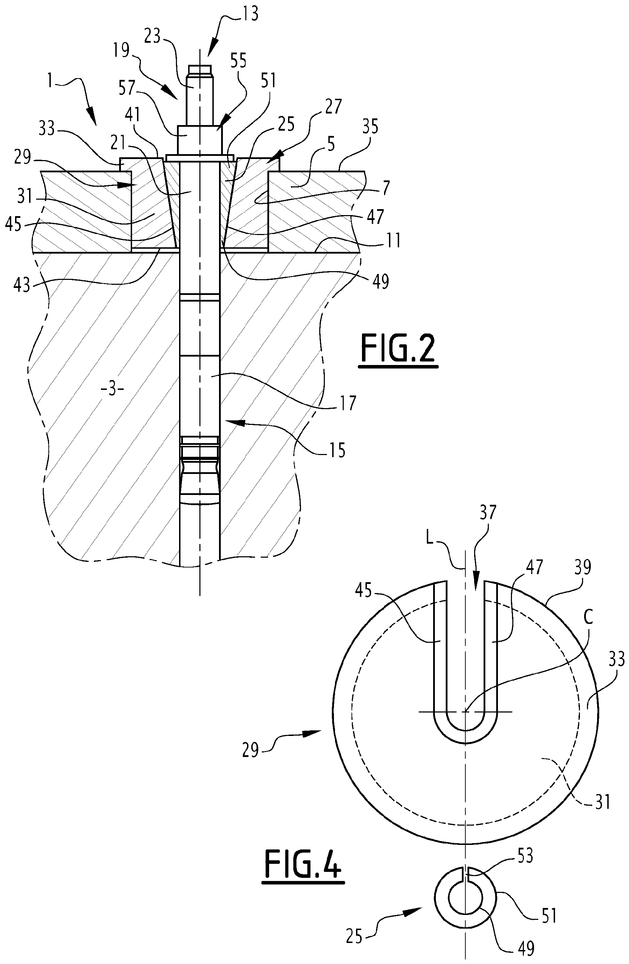

Le dispositif d'ancrage 1 représenté sur les figures 1 et 2 est destiné à la fixation d'un équipement (non représenté) à une structure de génie civil 3. La structure de génie civil fait partie d'une centrale nucléaire. En variante, elle fait partie d'une installation industrielle d'un autre type, ou fait partie d'un bâtiment non-industriel.

La structure de génie civil est typiquement en béton armé, c'est-à-dire en béton renforcé par des tiges métalliques noyées dans ledit béton. En variante, la structure de génie civil est en béton non-armé.

La structure de génie civil est un mur, un massif de béton, un plancher, un plafond, ou toute autre structure adaptée.

L'équipement fixé par le dispositif d'ancrage à la structure de génie civil 3 est par exemple une tuyauterie, ou une cuve, ou une gaine de ventilation, ou un chemin de câbles, ou tout autre type d'équipement.

Le dispositif d'ancrage est conçu pour fixer l'équipement à la structure de génie civil en respectant de multiples contraintes, notamment de tenue au séisme, dans le respect des normes internationales et nationales définissant les critères acceptables, par exemple la norme ATE (Agrément Technique Européen).

Le dispositif d'ancrage 1 comprend une platine 5 de support de l'équipement, la platine 5 comprenant elle-même au moins deux orifices 7 (figure 3).

La platine 5 est une plaque métallique, typiquement en acier. Elle présente une épaisseur de quelques millimètres. Elle est par exemple de forme rectangulaire, mais pourrait être de toute autre forme adaptée.

La platine 5 porte un organe 9 de support de l'équipement. Cet organe 9 est par exemple une poutre métallique, ou une équerre métallique, ou tout autre organe adapté.

L'organe de support 9 est généralement soudé sur la platine 5.

L'organe de support 9 est fixé au centre de la platine 5. Dans le cas d'une platine rectangulaire, le centre correspond au croisement des deux diagonales. En variante, l'organe de support 9 peut être fixé n'importe où sur la platine, en un ou plusieurs points.

La platine 5 comporte quatre orifices 7 dans l'exemple représenté. En variante, elle comporte trois orifices 7, ou plus de quatre orifices 7 ou seulement deux orifices 7.

Les orifices 7 sont avantageusement régulièrement répartis autour de l'organe 9. En variante, les orifices 7 sont répartis n'importe où sur la platine en fonction de la position de l'organe de support 9 sur ladite platine, en prenant en compte les exigences de tenue mécanique suivant le chargement envisagé.

La platine 5 est prévue pour être placée contre la surface libre 11 de la structure de génie civil, typiquement plaquée directement contre cette surface 11. En variante, il existe un espace entre la platine 5 et la surface 11, la platine 5 étant placée contre la surface libre 11 au moyen de tout composant mécanique adapté tels que des pieds.

Le dispositif d'ancrage 1 comporte, pour chaque orifice 7, une cheville 13 longitudinale, destinée à être rigidement fixée dans la structure de génie civil 3.

La direction longitudinale est sensiblement perpendiculaire au plan dans lequel s'étend la platine 5, c'est-à-dire au plan de la surface libre 11.

A cet effet, la structure de génie civil 3 comprend des trous 15, chacun prévu pour la réception d'une des chevilles 13. Les trous 15 sont débouchants au niveau de la surface 11.

La cheville 13 comporte à une extrémité longitudinale arrière une tête 17, prévue pour être engagée à l'intérieur du trou 15, et rigidement fixée à la structure de génie civil 3 par coopération avec la paroi du trou 15.

La tête 17 est par exemple bloquée à l'intérieur du trou 15 par expansion radiale d'un tronçon de la tête 17, ledit tronçon venant se verrouiller en position à l'intérieur du trou 15 par pression contre la paroi dudit trou. Un tel fonctionnement est connu, et la tête 17 de la cheville ne sera pas décrite plus en détail ici.

La cheville 13 comporte encore une tige 19, dont un tronçon 21 est engagé dans l'orifice 7 correspondant. La tige 19 est allongée longitudinalement, et est solidaire de la tête 17.

La cheville 13 présente encore une extrémité filetée avant 23.

L'extrémité filetée 23 est définie par la tige 19. Le tronçon 21 s'étend longitudinalement entre l'extrémité filetée 23 et la tête 17.

Le dispositif d'ancrage 1 comporte encore, pour chaque orifice 7, un organe de fixation 25 monté autour de la cheville 13 correspondante.

L'organe de fixation 25 présente typiquement la forme d'une bague.

L'organe de fixation 25 est enfilé autour du tronçon 21.

Comme visible sur les figures, le tronçon 21 présente dans un plan transversal perpendiculaire à la direction longitudinale une section de tige déterminée.

L'orifice 7 quant à lui présente une section d'orifice dans ledit plan transversal, supérieure à quatre fois la section de tige. La section d'orifice est de préférence supérieure à six fois la section de tige et encore de préférence supérieure à dix fois la section de tige.

Le dispositif d'ancrage comporte encore, pour chaque orifice 7, une liaison 27 de l'organe de fixation 25 à la platine 5, permettant de placer l'organe de fixation 25 à toute position donnée dans une zone déterminée de l'orifice 7, dans un plan parallèle à la platine.

Ladite zone déterminée de l'orifice 7 présente une section de zone dans ledit plan transversal, supérieure à quatre fois la section de tige. La section de zone est de préférence supérieure à six fois la section de tige et encore de préférence supérieure à dix fois la section de tige.

Typiquement, ladite zone déterminée correspond à tout l'orifice 7, en particulier quand l'orifice 7 est circulaire. En variante, ladite zone déterminée couvre seulement une partie de l'orifice, en particulier quand l'orifice a une forme irrégulière.

Pour chaque orifice 7, la liaison 27 comprend une bague 29, illustrée sur la figure 4, de forme conjuguée de celle de l'orifice 7.

Dans des plans transversaux, la bague 29 présente des sections circulaires.

Comme illustré sur les figures 2 et 4, la bague 29 typiquement est cylindrique.

Elle comprend une partie cylindrique 31, d'axe central C longitudinal. La partie cylindrique 31 est engagée dans l'orifice 7.

Avantageusement, à son extrémité longitudinale avant, prévue pour être disposée à l'opposé de la surface libre 11, la partie cylindrique 31 porte une collerette sortante 33. La collerette 33 est située hors de l'orifice 7. Elle est en appui contre la surface avant 35 de la platine 5, sur toute la périphérie de l'orifice 7.

Dans ce cas, chaque orifice 7 présente également une section transversale circulaire, comme illustré sur la figure 3. La section transversale est constante sur toute la hauteur longitudinale de l'orifice 7.

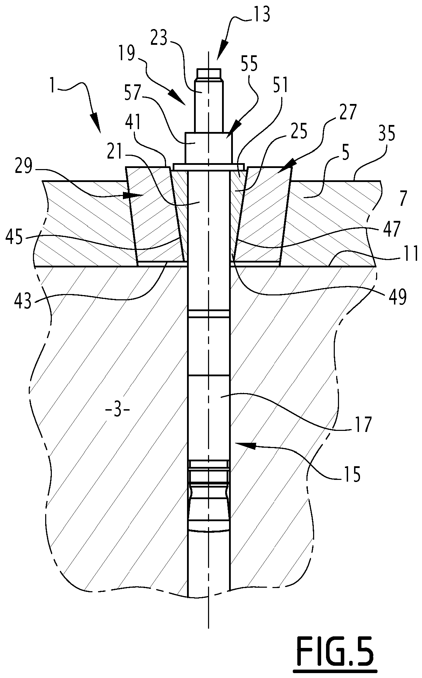

En variante, la bague 29 est tronconique, comme illustré sur la figure 5. Elle présente un axe central longitudinal. Elle ne comporte pas de collerette sortant à son extrémité longitudinale avant. La section transversale de la bague 29 diminue longitudinalement, d'avant en arrière.

Dans ce cas, chaque orifice 7 présente également une section tronconique.

Avant verrouillage de l'organe de fixation 25 par rapport à la platine 5, la bague 29 présente un/des diamètre(s) externe(s) légèrement inférieur(s) au(x) diamètre(s) interne(s) de l'orifice 7.

On entend par là que la partie de la bague 29 engagée dans l'orifice 7 présente un/des diamètre(s) externe(s) légèrement inférieur(s) à celui/ceux de l'orifice 7. La différence de diamètre entre la bague et l'orifice est comprise entre 1/100 de mm et 1 mm, de préférence compris entre 1/100 de mm et 5/10 de mm.

Une telle différence de diamètre permet de faire tourner facilement la bague 29 à l'intérieur de l'orifice 7 correspondant, pour s'adapter à la position réelle de la cheville.

Comme visible nettement sur la figure 4, la bague 29 comporte une fente 37, s'étendant légèrement à partir d'une zone radialement centrale de la bague jusqu'au bord radialement externe 39 de ladite bague. L'organe de fixation 25 est engagé dans la fente 37.

La fente 37 s'étend sur toute la hauteur longitudinale de la bague 29, et est débouchante à la fois sur la grande face avant 41 et sur la grande face arrière 43 de la bague 29. Les grandes faces avant et arrière 41 et 43 sont respectivement tournées à l'opposé de la surface 11 et vers la surface 11. La fente 37 est également débouchante au niveau du bord radialement externe 39.

Typiquement, la fente 37, considérée dans un plan transversal, est rectiligne et s'étend selon un rayon de la bague 29.

En variante, elle n'est pas rectiligne mais arquée.

La fente 37 est délimitée par deux bords 45, 47 inclinés l'un par rapport à l'autre. Les bords 45 et 47 sont en vis-à-vis l'un de l'autre. Ils convergent l'un vers l'autre quand on les suit longitudinalement depuis la grande face avant 41 jusqu'à la grande face arrière 43 de la bague (voir figure 2).

En d'autres termes, la section de la fente 37, prise dans un plan transversal, diminue longitudinalement depuis la grande face avant 41 jusqu'à la grande face arrière 43.

Comme visible sur les figures 2 et 4, l'organe de fixation 25 a une forme convergente. Il présente une extrémité longitudinale arrière 49, tournée vers la grande face arrière 43 de section transversale relativement plus petite, et une extrémité longitudinale avant 51 de section transversale relativement plus grande. Avantageusement, il possède une forme tronconique, d'axe central longitudinal.

Considérée dans un plan perpendiculaire à l'axe central C de la bague cylindrique, la fente 37 présente une ligne centrale L, visible sur la figure 4. Les bords 45 et 47 de la fente, considérés en section dans un plan perpendiculaire à la ligne L et parallèle à l'axe central C, forment entre eux un angle sensiblement égal à l'angle d'ouverture du tronc de cône défini par l'organe de fixation 25.

Ainsi, comme illustré sur la figure 2, quand l'organe de fixation 25 est engagé dans la fente 37, sa surface externe est en contact à la fois avec les deux bords 45 et 47.

On comprend donc que l'organe de fixation 25 est susceptible d'être placé à toute position donnée dans l'orifice, par rotation de la bague autour de l'axe central C, et déplacement de l'organe de fixation 25 le long de la fente 37.

Par ailleurs, l'organe de fixation 25 est fendu. Il présente une interruption circonférentielle 53, représentée sur la figure 4. Cette interruption 53 s'étend longitudinalement sur toute la longueur de l'organe de fixation, et radialement sur toute la l'épaisseur de l'organe de fixation.

Le dispositif d'ancrage 1 comporte encore, pour chaque orifice 7, un verrouillage réversible 55.

Le verrouillage réversible 55 permet de bloquer l'organe de fixation 25 par rapport à la platine 5 dans la position donnée, et également de bloquer l'organe de fixation 25 en position le long de la cheville 13.

Avantageusement, le verrouillage 55 comprend un écrou 57 vissé sur l'extrémité filetée 23 de la cheville, et sollicitant l'organe de fixation 25 vers la grande face arrière 43 de la bague 29. L'écrou 57 vient en contact avec l'extrémité longitudinale avant 51 de l'organe de fixation 25.

L'écrou 57 sollicite l'organe de fixation 25 vers l'intérieur de la fente 37, et tend à enfoncer l'organe de fixation 25 dans cette fente 37.

Du fait de la forme convergente de l'organe de fixation 25 et du fait que la section de la fente 37 tend à diminuer d'avant en arrière, l'organe de fixation 25 est bloqué longitudinalement, sa surface externe venant en appui contre les bords inclinés 45 et 47 de la fente 37.

Le serrage de la vis provoque la fermeture de l'interruption 53, l'organe de fixation 25 étant ainsi serré contre la tige de la cheville.

Par ailleurs, l'effort longitudinal appliqué par l'écrou 57 sur l'organe de fixation 25 est converti en un effort dans un plan perpendiculaire à la direction longitudinale, tendant à écarter les bords inclinés 45, 47 l'un de l'autre.

De ce fait, une fois l'écrou 57 suffisamment vissé, le bord externe 39 de la bague 29 vient en appui contre le bord périphérique de l'orifice 7, par déformation de la bague 29 sous l'effet de l'enfoncement de l'organe de fixation 25. La bague 29 vient ainsi se mettre en appui contre le bord périphérique de l'orifice 7, bloquant la bague 29 en position par rapport à la platine 5.

Ce double mouvement, d'enfoncement de l'organe de fixation 25 dans la fente 37 et de déformation de la bague 29, conduit au blocage de l'organe de fixation 25 en position par rapport à la platine 5 dans la position donnée.

L'invention porte également sur un procédé d'ancrage d'un équipement à une structure de génie civil.

Le procédé d'ancrage est prévu pour être mis en oeuvre à l'aide d'un dispositif d'ancrage 1 du type décrit ci-dessus. Inversement, le dispositif d'ancrage est particulièrement adapté pour la mise en oeuvre du procédé d'ancrage qui va être décrit ci-dessous.

Le procédé d'ancrage comprend les étapes suivantes :
- obtention d'une platine 5 de support de l'équipement, la platine 5 comprenant au moins deux orifices 7 ;
- pour chaque orifice 7, fixation d'une cheville 13 longitudinale dans la structure de génie civil 3 ;
- placement de la platine 5 contre la structure de génie civil 3, chaque cheville 13 étant située à une position donnée dans une zone déterminée de l'orifice 7 correspondant dans un plan parallèle à la platine 5;
- montage d'un organe de fixation 25 autour de chaque cheville 13 ;
- blocage de chaque organe de fixation 25 par rapport à la platine 5 dans la position donnée et verrouillage de l'organe de fixation 25 en position le long de la cheville 13.

La platine 5 est du type décrit ci-dessus. Les orifices 7 sont créés dans la platine 5 avant l'étape de fixation de la cheville 13 dans la structure de génie civil 3.

Comme décrit plus haut, chaque cheville 13 comprend une tige 19 dont un tronçon 21 est engagé dans ladite zone déterminée de l'orifice 7 correspondant. Ladite zone déterminée de l"orifice 7 a une section de zone dans le plan transversal supérieure à quatre fois la section du tronçon 21 de la tige 19, de préférence supérieure à six fois la section du tronçon 21 de la tige 19, et encore de préférence supérieure à dix fois ladite section du tronçon 21 de la tige 19.

L'orifice 7 quant à lui présente une section d'orifice dans ledit plan transversal, supérieure à quatre fois la section de tige. La section d'orifice est de préférence supérieure à six fois la section de tige et encore de préférence supérieure à dix fois la section de tige.

Typiquement, ladite zone déterminée correspond à tout l'orifice 7, en particulier quand l'orifice 7 est circulaire. En variante, ladite zone déterminée couvre seulement une partie de l'orifice, en particulier quand l'orifice a une forme irrégulière.

Le procédé comprend de préférence une étape préalable de vérification de la tenue mécanique satisfaisante de l'ancrage de l'équipement à la structure de génie civil, compte tenu des chargements mécaniques à considérer. Cette tenue est vérifiée par calcul, en prenant en compte des positions théoriques des chevilles 13 par rapport à la structure de génie civil 3, et une position théorique de la platine de support 5 par rapport à la structure de génie civil 3.

Avant fixation des chevilles 13 dans la structure de génie civil 3, le procédé comprend avantageusement une étape de repérage de la position exacte des tiges métalliques d'armature de la structure de génie civil.

Les chevilles 13 sont fixées dans la structure de génie civil 3 à des positions choisies pour ne pas endommager ces tiges métalliques. Ces positions, dans certains cas, diffèrent des positions théoriques considérées pour les calculs mentionnés ci-dessus.

La situation, une fois la platine 5 placée contre la structure de génie civil 3, est illustrée sur la figure 5.

Quand la platine 5 est dans sa position théorique par rapport à la structure de génie civil 3 et quand les chevilles 13 sont elles aussi à leurs positions théoriques, ces chevilles 13 se trouvent typiquement au centre des orifices 7. On voit sur la figure 5 que, du fait que les chevilles ne sont pas nécessairement placées dans leurs positions théoriques par rapport à la structure de génie civil 3, les chevilles 13 sont situées à des positions données dans les orifices 7 correspondants, qui ne correspondent pas au centre des orifices 7. Les positions données sont toutefois à l'intérieur des orifices 7.

Pour bloquer chaque organe de fixation 25 par rapport à la platine 5 dans la position donnée, et bloquer l'organe de fixation 25 en position le long de la cheville 13, les bagues 29 sont d'abord mises en place dans les orifices 7.

Les fentes 37 sont orientées de manière à ce que les tronçons 21 des tiges soient reçus dans les fentes 37.

Puis, on enfile un organe de fixation 25 autour de chaque cheville 13. L'organe de fixation 25, une fois enfilé autour de la cheville 13 correspondante, est disposé le long du tronçon 21 de la tige. Un écrou 57 est ensuite vissé sur l'extrémité filetée 23 de chaque cheville 13. L'écrou 57 sollicite l'organe de fixation 25 vers la grande face arrière 43 de la bague 29, c'est-à-dire vers le fond de la fente 37. Celui-ci vient en appui sur les bords inclinés 45, 47, ce qui provoque une déformation de la bague 29, qui vient en appui à son tour contre le bord périphérique de l'orifice 7. Quand l'écrou 57 est suffisamment vissé, la bague 29 est bloquée en position par rapport à la platine 5, et l'organe de fixation 25 est bloqué en position par rapport à la bague 29, à la fois longitudinalement le long de la cheville 13 et également le long de la fente 37.

Le dispositif et le procédé d'ancrage décrits ci-dessus présentent de multiples avantages.

Comme décrit plus haut, du fait de l'existence d'une liaison de l'organe de fixation à la platine, pour chaque orifice, permettant de placer l'organe de fixation à toute position donnée dans ladite zone déterminée de l'orifice dans un plan parallèle à la platine, et du fait de l'existence pour chaque orifice d'un verrouillage réversible permettant de bloquer l'organe de fixation par rapport à la platine dans la position donnée et de bloquer l'organe de fixation en position le long de la cheville, il est possible de réduire considérablement les délais d'intervention sur site et d'éliminer le risque d'erreurs de perçage de la platine.

En effet, la platine peut être pré-percée, c'est-à-dire percée en atelier avant la fixation des chevilles à la structure de génie civil.

La platine peut être fixée aux chevilles, quelles que soient leurs positions, même si ces positions sont différentes des positions théoriques, considérées pour les calculs de tenue en charge du dispositif d'ancrage. La liaison de la cheville à la platine permet en effet de réaliser la fixation quelle que soit la position de la cheville dans la surface couverte par ladite zone déterminée, qui correspond typiquement à toute la surface de l'orifice.

Ceci permet de positionner la platine exactement à l'endroit prévu dans les calculs de tenue en charge.

Un autre aspect particulièrement important de l'invention est le fait que, après verrouillage de l'organe de fixation par rapport à la platine dans la position donnée, il n'existe plus d'interstice entre la bague et le bord de l'orifice. Cet interstice est comblé typiquement sur tout le pourtour de la bague.

Ceci est particulièrement important du fait que la norme EN1992-4 (Eurocode 2), pour les sollicitations sismiques, impose un abattement de la moitié de la résistance au cisaillement des ancrages mécaniques s'il existe un jeu significatif entre le corps de la cheville et la platine d'ancrage.

Dans l'invention, il n'existe pas de jeu significatif entre le corps de la cheville et la platine d'ancrage, ce jeu étant entièrement comblé par l'organe de fixation et la bague.

Le fait que l'orifice ait une section supérieure à quatre fois la section du tronçon de la tige permet de faire varier la position de la cheville dans la structure de génie civil sur une large plage de positions, pour tenir compte notamment de la position des tiges métalliques renforçant le béton.

L'utilisation d'une bague engagée dans un orifice circulaire avec une fente de réception de l'organe de fixation, permet de balayer de manière très commode toutes les positions possibles des chevilles à l'intérieur des orifices.

L'utilisation pour la fente de deux bords inclinés l'un par rapport à l'autre permet de réaliser de manière très commode le blocage de l'organe de fixation par rapport à la platine, et permet également de combler de manière commode au moment du serrage le jeu entre la bague et le bord de l'orifice.

Le fait que la bague présente un diamètre externe inférieur de 0,01 à 1 mm au diamètre interne de l'orifice permet d'obtenir à la fois une orientation facile de la bague dans l'orifice et un comblement commode du jeu au moment du serrage.

Quand l'organe de fixation a une forme convergente, le verrouillage réversible est effectué de manière particulièrement facile.

L'utilisation d'un écrou pour le verrouillage réversible est particulièrement pratique puisqu'un simple vissage de l'écrou permet de solliciter l'organe de fixation vers l'intérieur de la fente.

Le fait que l'organe de fixation soit fendu permet de mettre en place facilement l'organe de fixation le long de la tige de la cheville, puis, au moment du verrouillage, permet de serrer et de bloquer en position l'organe de fixation le long de la tige.

Le dispositif d'ancrage et le procédé d'ancrage peuvent présenter de multiples variantes.

La cheville longitudinale peut être de tout type adapté.

L'organe de fixation n'est pas nécessairement convergent, bien que la forme convergente soit préférée.

L'organe de fixation pourrait ne pas être fendu et être bloqué le long de la tige de la cheville par déformation sous l'effet du verrouillage.

La liaison de l'organe de fixation à la platine, permettant de placer l'organe de fixation à toute position donnée dans la zone déterminée de l'orifice, peut être de tout type adapté. Cette liaison combine par exemple un mouvement de rotation et un mouvement de translation radiale, comme dans l'exemple décrit ci-dessus. En variante, cette liaison combine deux degrés de liberté en rotation, ou deux degrés de liberté en translation.

Le verrouillage réversible peut également être réalisé par tous moyens adaptés. La bague peut être bloquée par serrage direct de la collerette contre la platine. L'organe de fixation est serré contre la bague indépendamment du blocage de la bague par rapport à la platine.

Comme indiqué plus haut, la zone déterminée correspond de préférence à tout l'orifice. En variante, la zone déterminée ne couvre qu'une partie de l'orifice, cette partie restant toutefois suffisamment grande pour permettre une large plage de variation pour le positionnement de l'organe de fixation. Ceci est le cas par exemple quand l'orifice présente une forme irrégulière, avec des zones inaccessible pour la liaison de l'organe de fixation à la platine (échancrures sur le bord de l'orifice, orifice légèrement ovale recevant une bague circulaire...). C'est le cas également quand la fente de la bague a une forme qui ne permet pas de positionner l'organe de fixation partout, par exemple pas au centre de l'orifice.

## Revendications

1. Dispositif d'ancrage (1) d'un équipement à une structure de génie civil (3), ce dispositif comprenant :
- une platine (5) de support de l'équipement, la platine (5) comprenant au moins deux orifices (7), la platine (5) étant prévue pour être placée contre la surface libre (11) de la structure de génie civil ;
- pour chaque orifice (7), une cheville (13) longitudinale destinée à être rigidement fixée dans la structure (3) de génie civil ;
- pour chaque orifice (7), un organe de fixation (25) monté autour de la cheville (13) ;
- pour chaque orifice (7), une liaison (27) de l'organe de fixation (25) à la platine (5);
- pour chaque orifice (7), un verrouillage réversible (55), permettant de bloquer l'organe de fixation (25) par rapport à la platine dans la position donnée et de bloquer l'organe de fixation en position le long de la cheville (13) ; l'orifice (7) présentant une section circulaire ;
la liaison (27) de l'organe de fixation (25) à la platine (5) comprenant une bague (29) de forme conjuguée de celle de l'orifice (7), présentant un axe central (C) et un bord (39) radialement externe, la bague (29) ayant une fente (37) s'étendant de l'axe central (C) au bord radialement externe (39) ;
la bague (29) ayant une forme cylindrique ou tronconique ;
**caractérisé en ce que** la liaison (27) de l'organe de fixation (25) à la platine (5) permet de placer l'organe de fixation (25) à toute position donnée dans une zone déterminée de l'orifice (7) dans un plan parallèle à la platine (5), **en ce que** l'organe de fixation (25) est engagé dans ladite fente (37), et **en ce que** la fente (37) est délimitée par deux bords (45, 47) inclinés l'un par rapport à l'autre, la section de la fente (37) diminuant longitudinalement depuis une grande face avant (41) de la bague (29) jusqu'à une grande face arrière (43) de la bague (29), où les grandes faces avant et arrière (41, 43) sont respectivement tournées à l'opposé de la surface (11) et vers la surface (11).

2. Dispositif selon la revendication 1, dans lequel la cheville (13) comprend une tige (19) dont un tronçon (21) est engagé dans ladite zone déterminée de l'orifice (7), le tronçon (21) ayant une section de tige dans un plan perpendiculaire à la direction longitudinale, la zone déterminée de l'orifice (7) ayant une section de zone dans ledit plan perpendiculaire à la direction longitudinale supérieure à quatre fois la section de tige.

3. Dispositif selon l'une quelconque des revendications précédentes, dans lequel, avant verrouillage, la bague (29) présente un diamètre externe, l'orifice (7) ayant un diamètre interne supérieur de 0,01 à 1 mm audit diamètre externe.

4. Dispositif selon l'une quelconque des revendications précédentes, dans lequel l'organe de fixation (25) a une forme convergente, avec une extrémité longitudinale arrière (49) tournée vers la grande face arrière (43) et une extrémité longitudinale avant (51) de section relativement plus grande que l'extrémité longitudinale arrière (49) .

5. Dispositif selon la revendication 4, dans lequel le verrouillage (55) comprend un écrou (57) vissé sur une extrémité filetée (23) de la cheville (13), sollicitant l'organe de fixation (25) vers la grande face arrière (43) de la bague (29).

6. Dispositif selon l'une quelconque des revendications précédente, dans lequel l'organe de fixation (25) est une bague fendue.

7. Procédé d'ancrage d'un équipement à une structure de génie civil (3) à l'aide d'un dispositif d'ancrage (1) selon la revendication 1, le procédé comprenant les étapes suivantes :
- obtention de la platine (5) de support de l'équipement;
- pour chaque orifice (7), fixation de la cheville longitudinale (13) dans la structure de génie civil (3) ;
- placement de la platine (5) contre la structure de génie-civil (3), chaque cheville (13) étant située à une position donnée dans une zone déterminée de l'orifice (7) correspondant dans un plan parallèle à la platine (5) ;
- montage de l'organe de fixation (25) autour de chaque cheville (13) ;
- blocage de chaque organe de fixation (25) par rapport à la platine (5) dans la position donnée et blocage de l'organe de fixation (25) en position le long de la cheville (13) ;
la cheville (13) comprenant une tige (19) dont un tronçon (21) est engagé dans ladite zone déterminée de l'orifice (7), le tronçon (21) ayant une section de tige dans un plan perpendiculaire à la direction longitudinale, ladite zone déterminée de l'orifice (7) ayant une section de zone dans ledit plan perpendiculaire à la direction longitudinale supérieure à quatre fois la section de tige.
le procédé comprenant une étape de mise en place dans chaque orifice (7) d'une bague (29) de forme conjuguée de celle de l'orifice (7), présentant un axe central (C) et un bord (39) radialement externe, la bague (29) ayant une fente (37) s'étendant de l'axe central (C) au bord radialement externe (39), la fente (37) étant orientée pour que le tronçon (21) de l'organe de fixation (25) soit reçu dans la fente (37) ;
la bague (29) ayant une forme cylindrique ou tronconique ;
la fente (37) étant délimitée par deux bords (45, 47) inclinés l'un par rapport à l'autre, la section de la fente (37) diminuant longitudinalement depuis une grande face avant (41) de la bague (29) jusqu'à une grande face arrière (43) de la bague (29).

## Patentansprüche

1. Verankerungsvorrichtung (1) einer Ausrüstung an einer Bauwerkstruktur (3), diese Vorrichtung umfassend:
- eine Platte (5) zum Tragen der Ausrüstung, die Platte (5) umfassend mindestens zwei Öffnungen (7), wobei die Platte (5) dazu vorgesehen ist, um gegen die freie Oberfläche (11) der Bauwerkstruktur platziert zu werden;
- für jede Öffnung (7) einen Längsstift (13), der dazu bestimmt ist, starr in der Bauwerkstruktur (3) befestigt zu werden;
- für jede Öffnung (7) ein Befestigungselement (25), das um den Stift (13) herum montiert ist;
- für jede Öffnung (7) eine Verbindung (27) des Befestigungselements (25) mit der Platte (5);
- für jede Öffnung (7) eine umkehrbare Verriegelung (55), die es ermöglicht, das Befestigungselement (25) in Bezug auf die Platte in der gegebenen Position zu arretieren und das Befestigungselement in der Position entlang des Stifts (13) zu arretieren;
wobei die Öffnung (7) einen kreisförmigen Querschnitt aufweist;
wobei die Verbindung (27) des Befestigungselements (25) mit der Platte (5) einen Ring (29) umfasst, dessen Form der der Öffnung (7) entspricht und der eine Mittelachse (C) und einen radial äußeren Rand (39) aufweist, wobei der Ring (29) einen Schlitz (37) aufweist, der sich von der Mittelachse (C) bis zu dem radial äußeren Rand (39) erstreckt;
wobei der Ring (29) eine zylindrische oder kegelstumpfförmige Form aufweist;
**dadurch gekennzeichnet, dass** die Verbindung (27) des Befestigungselements (25) mit der Platte (5) es ermöglicht, das Befestigungselement (25) in jeder gegebenen Position in einem bestimmten Bereich der Öffnung (7) in einer Ebene parallel zu der Platte (5) anzuordnen, dass das Befestigungselement (25) den genannten Schlitz (37) eingreift, und dass der Schlitz (37) durch zwei Ränder (45, 47) begrenzt ist, die zueinander geneigt sind, wobei der Querschnitt des Schlitzes (37) in Längsrichtung von einer großen Vorderseite (41) des Rings (29) zu einer großen Rückseite (43) des Rings (29) abnimmt, wobei die große Vorder- und Rückseite (41, 43) von der Oberfläche (11) weg bzw. zu der Oberfläche (11) hin gerichtet sind.

2. Vorrichtung nach Anspruch 1, wobei der Stift (13) einen Schaft (19) umfasst, wovon ein Abschnitt (21) den bestimmten Bereich der Öffnung (7) eingreift, wobei der Abschnitt (21) einen Schaftquerschnitt in einer Ebene senkrecht zu der der Längsrichtung aufweist, wobei der bestimmte Bereich der Öffnung (7) einen Bereichsquerschnitt in der Ebene senkrecht zu der Längsrichtung aufweist, der größer ist als das Vierfache des Schaftquerschnitts.

3. Vorrichtung nach einem der vorherigen Ansprüche, wobei der Ring (29) vor Verriegeln einen Außendurchmesser aufweist, wobei die Öffnung (7) einen Innendurchmesser aufweist, der um 0,01 bis 1 mm größer ist als der Außendurchmesser.

4. Vorrichtung nach einem der vorherigen Ansprüche, wobei das Befestigungselement (25) eine konvergierende Form aufweist, mit einem hinteren Längsende (49), das der großen Rückseite (43) zugewandt ist, und einem vorderen Längsende (51), dessen Querschnitt relativ größer ist als der des hinteren Längsendes (49).

5. Vorrichtung nach Anspruch 4, wobei die Verriegelung (55) eine Mutter (57) umfasst, die auf ein Gewindeende (23) des Stifts (13) aufgeschraubt ist und das Befestigungselement (25) in Richtung der großen hinteren Fläche (43) des Rings (29) vorspannt.

6. Vorrichtung nach einem der vorherigen Ansprüche, wobei das Befestigungselement (25) ein Spaltring ist.

7. Verankerungsverfahren einer Ausrüstung an einer Bauwerkstruktur (3) mittels einer Verankerungsvorrichtung (1) nach Anspruch 1, das Verfahren umfassend die folgenden Schritte:
- Erlangen der Platte (5) zum Tragen der Ausrüstung;
- für jede Öffnung (7), Befestigen des Längsstifts (13) in der Bauwerkstruktur (3);
- Platzieren der Platte (5) an der Bauwerkstruktur (3), wobei sich jeder Stift (13) an einer bestimmten Position in einem bestimmten Bereich der entsprechenden Öffnung (7) in einer Ebene parallel zu der Platte (5) befindet;
- Montieren des Befestigungselements (25) um jeden Stift (13);
- Blockieren jedes Befestigungselements (25) in Bezug auf die Platte (5) in der gegebenen Position und Blockieren des Befestigungselements (25) in der Position entlang des Stifts (13); der Stift (13) umfassend einen Schaft (19), wovon ein Abschnitt (21) den bestimmten Bereich der Öffnung (7) eingreift, wobei der Abschnitt (21) einen Schaftquerschnitt in einer Ebene senkrecht zu der der Längsrichtung aufweist, wobei der bestimmte Bereich der Öffnung (7) einen Bereichsquerschnitt in der Ebene senkrecht zu der Längsrichtung aufweist, der größer ist als das Vierfache des Schaftquerschnitts.
das Verfahren umfassend einen Schritt zum Einsetzen eines Rings (29), dessen Form der der Öffnung (7) entspricht und der eine Mittelachse (C) und einen radial äußeren Rand (39) aufweist, in jede Öffnung (7), wobei der Ring (29) einen Schlitz (37) aufweist, der sich von der Mittelachse (C) bis zu dem äußeren Rand (39) erstreckt, wobei der Schlitz (37) ausgerichtet ist, sodass der Abschnitt (21) des Befestigungselements (25) in dem Schlitz (37) aufgenommen ist;
wobei der Ring (29) eine zylindrische oder kegelstumpfförmige Form aufweist;
der Schlitz (37) von zwei zueinander geneigten Kanten (45, 47) begrenzt ist, wobei der Querschnitt des Schlitzes (37) in Längsrichtung von einer großen Vorderseite (41) des Rings (29) zu einer großen Rückseite (43) des Rings (29) abnimmt.

## Claims

1. A device (1) for anchoring an equipment item to a civil engineering structure (3), this device comprising:
- a support plate (5) for the equipment, the plate (5) comprising at least two orifices (7), the plate (5) being provided to be placed against the free surface (11) of the civil engineering structure;
- for each orifice (7), a longitudinal dowel (13) intended to be rigidly fastened in the civil engineering structure (3);
- for each orifice (7), a fastening member (25) mounted around the dowel (13);
- for each orifice (7), a connection (27) of the fastening member (25) to the plate (5);
- for each orifice (7), a reversible lock (55) for blocking the fastening member (25) with respect to the plate in the given position and for blocking the fastening member in position along the dowel (13)
the orifice (7) having a circular section;
the connection (27) of the fastening member (25) to the plate (5) comprises a ring (29) with a shape conjugated to that of the orifice (7), having a central axis (C) and a radially outer edge (39), the ring (29) having a slit (37) extending from the central axis (C) to the radially outer edge (39);
the ring (29) having a cylindrical or frustoconical shape;
**characterized in that** the connection (27) of the fastening member (25) to the plate (5) allows the fastening member (25) to be placed at any given position in a defined region of the orifice (7) in a plane parallel to the plate (5),
**in that** the fastening member (25) is engaged in said slit (37),
and **in that** the slit (37) is delimited by two edges (45, 47) that are inclined relative to one another, the section (37) of the slit decreasing longitudinally from a large front face (41) of the ring (29) to a large rear face (43) of the ring (29), where the large front and rear faces (41, 43) respectively face away from the surface (11) and toward the surface (11).

2. The device according to claim 1, wherein the dowel (13) comprises a rod (19), a segment (21) of which is engaged in said determined zone of the orifice (7), the segment (21) having a rod section in a plane perpendicular to the longitudinal direction, the determined zone of the orifice (7) having a zone section in said plane perpendicular to the longitudinal direction greater than four times the rod section.

3. The device according to any one of the preceding claims, wherein, before locking, the ring (29) has an outer diameter, the orifice (7) having an inner diameter from 0.01 to 1 mm greater than said outer diameter.

4. The device according to any one of the preceding claims, wherein the fastening member (25) has a converging shape, with a rear longitudinal end (49) facing toward the large rear face (43) and a front longitudinal end (51) with a relatively larger section than the rear longitudinal end (49).

5. The device according to claim 4, wherein the lock (55) comprises a nut (57) screwed on a threaded end (23) of the dowel (13), stressing the fastening member (25) toward the large rear face (43) of the ring (29).

6. The device according to any one of the preceding claims, wherein the fastening member (25) is a split ring.

7. A method for anchoring an equipment item to a civil engineering structure (3) using an anchoring device (1) according to claim 1, the method comprising the following steps:
- obtaining the support plate (5) for the equipment;
- for each orifice (7), fastening the longitudinal dowel (13) in the civil engineering structure (3);
- placing the plate (5) against the civil engineering structure (3), each dowel (13) being located in a given position in a determined zone of the corresponding orifice (7) in a plane parallel to the plate (5);
- mounting the fastening member (25) around each dowel (13);
- blocking each fastening member (25) with respect to the plate (5) in the given position and blocking the fastening member (25) in position along the dowel (13);
the dowel (13) comprising a rod (19), a segment (21) of which is engaged in said determined zone of the orifice (7), the segment (21) having a rod section in a plane perpendicular to the longitudinal direction, said determined zone of the orifice (7) having a zone section in said plane perpendicular to the longitudinal direction greater than four times the rod section,
the method comprising a step of placing, in each orifice (7), a ring (29) with a shape conjugated to that of the orifice (7), having a central axis (C) and a radially outer edge (39), the ring (29) having a slit (37) extending from the central axis (C) to the radially outer edge (39), the slit (37) being oriented so that the segment (21) of the fastening member (25) is received in the slit (37);
the ring (29) having a cylindrical or frustoconical shape;
the slit (37) being delimited by two edges (45, 47) that are inclined relative to one another, the section (37) of the slit decreasing longitudinally from a large front face (41) of the ring (29) to a large rear face (43) of the ring (29).
